(19) Europäisches Patentamt
European Patent Office
Office européen des brevets

(11) **EP 3 907 722 A1**

(12) **EUROPEAN PATENT APPLICATION**

(43) Date of publication:
**10.11.2021 Bulletin 2021/45**

(51) Int Cl.:
**G08G 1/16** (2006.01)     **B60W 60/00** (2020.01)

(21) Application number: **20207740.0**

(22) Date of filing: **16.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.05.2020   US 202016869654**

(71) Applicant: **Intel Corporation**
**Santa Clara, CA 95054 (US)**

(72) Inventors:
• **OBORIL, Fabian**
**75139 Karlsruhe (DE)**
• **SCHOLL, Kay-Ulrich**
**76316 Malsch (DE)**

(74) Representative: **Viering, Jentschura & Partner mbB**
**Patent- und Rechtsanwälte**
**Am Brauhaus 8**
**01099 Dresden (DE)**

(54) **SYSTEMS, DEVICES, AND METHODS FOR RISK-AWARE DRIVING**

(57)     A system for a vehicle may be configured to, for each combination including a driving behavior of one or more driving behaviors, a traffic situation of one or more traffic situations in which to implement the one or more driving behaviors, and an object hypothesis of one or more object hypotheses for each of the one or more traffic situations obtain, for the respective combination, one or more driving model parameters associated with the driving behavior and object hypothesis for the respective combination obtain, for the respective combination, a probability indicating a likelihood of an accident or collision for the respective combination determine, for the respective combination, a risk value based on the obtained safety driving parameters and the obtained probability for the respective combination; and select a driving behavior for each traffic situation based at least in part on the one or more determined risk values.

FIG. 5

## Description

Technical Field

Various aspects of this disclosure generally relate to autonomous driving systems and devices.

Background

Safety driving models for autonomous driving (AD) behavior can require a 100% correct representation of the environment in order to check whether the vehicle is in a critical state or not and then create a proper response in order to bring the car out of the critical situation. However, environment models in reality are impacted by various factors that add uncertainties or even faults to the resulting representation. Usually these uncertainties are only used by filters that decide based on thresholds whether the information is used or taken as not true.

A problem of safety driving models is that they may only consider worst case scenarios, and this type of consideration leads to very conservative behavior resulting in very slow or no movement in critical situations. However, this behavior is not due to their underlying semantic rules, rather it is a problem of proper situation assessment within the models.

Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:

FIG. 1 shows an exemplary autonomous vehicle in accordance with various aspects of the present disclosure;
FIG. 2 shows various exemplary electronic components of a safety system of the vehicle in accordance with various aspects of the present disclosure;
FIG. 3 shows an exemplary network area with various communication devices according to some aspects;
FIG. 4 shows an exemplary safety driving model flow in accordance at least one exemplary embodiment of the present disclosure.
FIG. 5 shows an exemplary safety driving model method in accordance at least one exemplary embodiment of the present disclosure.
FIG. 6 shows a representation of an exemplary traffic situation in accordance at least one exemplary embodiment of the present disclosure.
FIGS. 7A and 7B shows graphs representing the geometrical distances and risk values for the traffic situation of FIG. 6.

Description

The following detailed description refers to the accompanying drawings that show, by way of illustration, exemplary details and aspects in which the invention may be practiced.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The phrases "group (of)", "set (of)", "collection (of)", "series (of)", "sequence (of)", "grouping (of)", etc., and the like in the description and in the claims, if any, refer to a quantity equal to or greater than one, i.e., one or more. The phrases "proper subset", "reduced subset", and "lesser subset" refer to a subset of a set that is not equal to the set, illustratively, referring to a subset of a set that contains less elements than the set.

The phrase "at least one of' with regard to a group of elements may be used herein to mean at least one element from the group including the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit, and may also be referred to as a "processing circuit," "processing circuitry," among others. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality, among others, and conversely that any single processor, controller, or logic circuit detailed herein may be realized as two (or more) separate entities with equivalent functionality, among others.

As used herein, "memory" is understood as a computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of driven or drivable object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, a rocket, and the like.

A "ground vehicle" may be understood to include any type of vehicle, as described above, which is configured to traverse or be driven on the ground, e.g., on a street, on a road, on a track, on one or more rails, off-road, etc. An "aerial vehicle" may be understood to be any type of vehicle, as described above, which is capable of being maneuvered above the ground for any duration of time, e.g., a drone. Similar to a ground vehicle having wheels, belts, etc., for providing mobility on terrain, an "aerial vehicle" may have one or more propellers, wings, fans, among others, for providing the ability to maneuver in the air. An "aquatic vehicle" may be understood to be any type of vehicle, as described above, which is capable of being maneuvers on or below the surface of liquid, e.g., a boat on the surface of water or a submarine below the surface. It is appreciated that some vehicles may be configured to operate as one of more of a ground, an aerial, and/or an aquatic vehicle.

The term "autonomous vehicle" may describe a vehicle capable of implementing at least one navigational change without driver input. A navigational change may describe or include a change in one or more of steering, braking, or acceleration/deceleration of the vehicle. A vehicle may be described as autonomous even in case the vehicle is not fully automatic (e.g., fully operational with driver or without driver input). Autonomous vehicles may include those vehicles that can operate under driver control during certain time periods and without driver control during other time periods. Autonomous vehicles may also include vehicles that control only some aspects of vehicle navigation, such as steering (e.g., to maintain a vehicle course between vehicle lane constraints) or some steering operations under certain circumstances (but not under all circumstances), but may leave other aspects of vehicle navigation to the driver (e.g., braking or braking under certain circumstances). Autonomous vehicles may also include vehicles that share the control of one or more aspects of vehicle navigation under certain circumstances (e.g., hands-on, such as responsive to a driver input) and vehicles that control one or more aspects of vehicle navigation under certain circumstances (e.g., hands-off, such as independent of driver input). Autonomous vehicles may also include vehicles that control one or more aspects of vehicle navigation under certain circumstances, such as under certain environmental conditions (e.g., spatial areas, roadway conditions). In some aspects, autonomous vehicles may handle some or all aspects of braking, speed control, velocity control, and/or steering of the vehicle. An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

In the context of the present disclosure, "vehicle operation data" may be understood to describe any type of feature related to the operation of a vehicle. By way of example, "vehicle operation data" may describe the status of the vehicle such as the type of propulsion unit(s), types of tires or propellers of the vehicle, the type of vehicle, and/or the age of the manufacturing of the vehicle. More generally, "vehicle operation data" may describe or include static features or static vehicle operation data (illustratively, features or data not changing over time). As another example, additionally or alternatively, "vehicle operation data" may describe or include features changing during the operation of the vehicle, for example, environmental conditions, such as weather conditions or road conditions during the operation of the vehicle, fuel levels, fluid levels, operational parameters of the driving source of the vehicle, etc. More generally, "vehicle operation data" may describe or include varying features or varying vehicle operation data (illustratively, time-varying features or data).

Various aspects herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

Throughout the present disclosure, the following terms may be used as synonyms: driving parameter set, driving model parameters, driving model parameter set, safety layer parameter set, driver assistance, automated driving model parameter set, and/or the like (e.g., driving safety parameter set). These terms may correspond to groups of values used to implement one or more models for directing a vehicle to operate according to the manners described herein.

Furthermore, throughout the present disclosure, the following terms may be used as synonyms: driving parameter, driving model parameter, safety layer parameter, driver assistance and/or automated driving model parameter, and/or the like (e.g., driving safety parameter), and may correspond to specific values within the previously described sets.

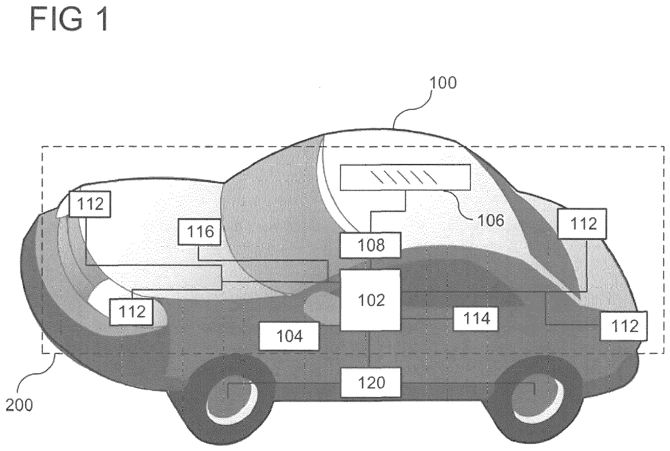

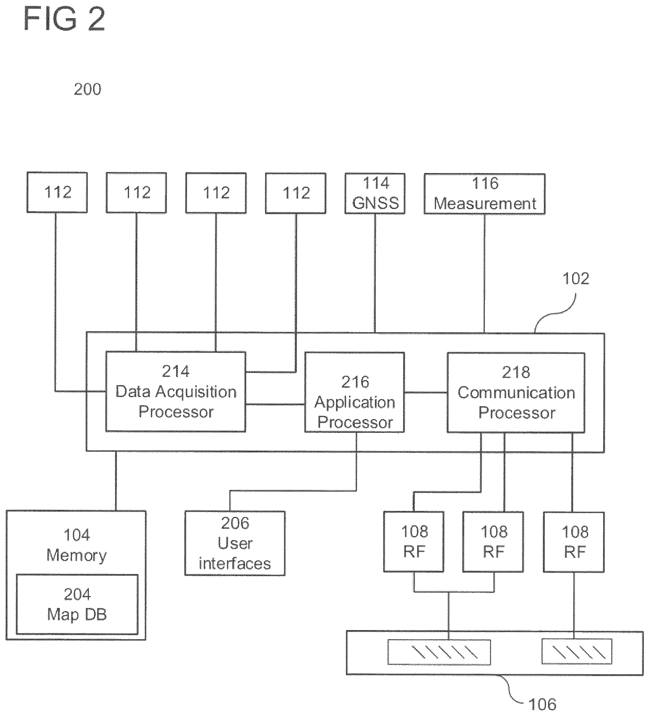

FIG. **1** shows a vehicle **100** including a mobility system **120** and a control system **200** (see also FIG. **2**) in accordance with various aspects. It is appreciated that vehicle **100** and control system **200** are exemplary in nature and may thus be simplified for explanatory purposes. For example, while vehicle **100** is depicted as a ground vehicle, aspects of this disclosure may be equally or analogously applied to aerial vehicles such as drones or aquatic vehicles such as boats. Furthermore, the quantities and locations of elements, as well as relational distances (as discussed above, the figures are not to scale) are provided as examples and are not limited thereto. The components of vehicle **100** may be arranged around a vehicular housing of vehicle **100,** mounted on or outside of the vehicular housing, enclosed within the vehicular housing, or any other arrangement relative to the vehicular housing where the components move with vehicle **100** as it travels. The vehicular housing, such as an automobile body, drone body, plane or helicopter fuselage, boat hull, or similar type of vehicular body dependent on the type of vehicle that vehicle **100** is.

In addition to including a control system **200,** vehicle **100** may also include a mobility system **120.** Mobility system **120** may include components of vehicle **100** related to steering and movement of vehicle **100.** In some aspects, where vehicle **100** is an automobile, for example, mobility system **120** may include wheels and axles, a suspension, an engine, a transmission, brakes, a steering wheel, associated electrical circuitry and wiring, and any other components used in the driving of an automobile. In some aspects, where vehicle **100** is an aerial vehicle, mobility system **120** may include one or more of rotors, propellers, jet engines, wings, rudders or wing flaps, air brakes, a yoke or cyclic, associated electrical circuitry and wiring, and any other components used in the flying of an aerial vehicle. In some aspects, where vehicle **100** is an aquatic or sub-aquatic vehicle, mobility system **120** may include any one or more of rudders, engines, propellers, a steering wheel, associated electrical circuitry and wiring, and any other components used in the steering or movement of an aquatic vehicle. In some aspects, mobility system **120** may also include autonomous driving functionality, and accordingly may include an interface with one or more processors **102** configured to perform autonomous driving computations and decisions and an array of sensors for movement and obstacle sensing. In this sense, the mobility system **120** may be provided with instructions to direct the navigation and/or mobility of vehicle **100** from one or more components of the control system **200.** The autonomous driving components of mobility system **120** may also interface with one or more radio frequency (RF) transceivers **108** to facilitate mobility coordination with other nearby vehicular communication devices and/or central networking components that perform decisions and/or computations related to autonomous driving.

The control system **200** may include various components depending on the requirements of a particular implementation. As shown in FIG. **1** and FIG. **2,** the control system **200** may include one or more processors **102,** one or more memories **104,** an antenna system **106** which may include one or more antenna arrays at different locations on the vehicle for radio frequency (RF) coverage, one or more radio frequency (RF) transceivers **108,** one or more data acquisition devices **112,** one or more position devices **114** which may include components and circuitry for receiving and determining a position based on a Global Navigation Satellite System (GNSS) and/or a Global Positioning System (GPS), and one or more measurement sensors **116,** e.g. speedometer, altimeter, gyroscope, velocity sensors, etc.

The control system **200** may be configured to control the vehicle's **100** mobility via mobility system **120** and/or interactions with its environment, e.g. communications with other devices or network infrastructure elements (NIEs) such as base stations, via data acquisition devices **112** and the radio frequency communication arrangement including the one or more RF transceivers **108** and antenna system **106.**

The one or more processors **102** may include a data acquisition processor **214,** an application processor **216,** a communication processor **218,** and/or any other suitable processing device. Each processor **214, 216, 218** of the one or more processors **102** may include various types of hardware-based processing devices. By way of example, each processor **214, 216, 218** may include a microprocessor, pre-processors (such as an image pre-processor), graphics processors, a central processing unit (CPU), support circuits, digital signal processors, integrated circuits, memory, or any other types of devices suitable for running applications and for image processing and analysis. In some aspects, each processor **214, 216, 218** may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors **214, 216, 218** disclosed herein may be configured to perform certain functions in accordance with program instructions which may be stored in a memory of the one or more memories **104.** In other words, a memory of the one or more memories **104** may store software that, when executed by a processor (e.g., by the one or more processors **102**), controls the operation of the system, e.g., a driving and/or safety system. A memory of the one or more memories **104** may store one or more databases and image processing software, as well as a trained system, such as a neural network, or a deep neural network, for example. The one or more memories **104** may include any number of random-access memories, read only memories, flash memories, disk drives, optical storage, tape storage, removable storage and other types of storage. Alternatively, each of processors **214, 216, 218** may include an internal memory for such storage.

The data acquisition processor **216** may include processing circuity, such as a CPU, for processing data acquired by data acquisition units **112.** For example, if one or more data acquisition units are image acquisition units, e.g. one or more cameras, then the data acquisition processor may include image processors for processing image data using the information obtained from the image acquisition units as an input. The data acquisition processor **216** may therefore be configured to create voxel maps detailing the surrounding of the vehicle **100** based on the data input from the data acquisition units **112,** i.e., cameras in this example.

Application processor **216** may be a CPU, and may be configured to handle the layers above the protocol stack, including the transport and application layers. Application processor **216** may be configured to execute various applications and/or programs of vehicle **100** at an application layer of vehicle **100,** such as an operating system (OS), a user interfaces (UI) **206** for supporting user interaction with vehicle **100,** and/or various user applications. Application processor **216** may interface with communication processor **218** and act as a source (in the transmit path) and a sink (in the receive path) for user data, such as voice data, audio/video/image data, messaging data, application data, basic Internet/web access data, etc. In the transmit path, communication processor **218** may therefore receive and process outgoing data provided by application processor **216** according to the layer-specific functions of the protocol stack, and provide the resulting data to digital signal processor **208.** Communication processor **218** may then perform physical layer processing on the received data to produce digital baseband samples, which digital signal processor may provide to RF transceiver(s) **108.** RF transceiver(s) **108** may then process the digital baseband samples to convert the digital baseband samples to analog RF signals, which RF transceiver(s) **108** may wirelessly transmit via antenna system **106.** In the receive path, RF transceiver(s) **108** may receive analog RF signals from antenna system **106** and process the analog RF signals to obtain digital baseband samples. RF transceiver(s) **108** may provide the digital baseband samples to communication processor **218,** which may perform physical layer processing on the digital baseband samples. Communication processor **218** may then provide the resulting data to other processors of the one or more processors **102**, which may process the resulting data according to the layer-specific functions of the protocol stack and provide the resulting incoming data to application processor **216**. Application processor **216** may then handle the incoming data at the application layer, which can include execution of one or more application programs with the data and/or presentation of the data to a user via one or more user interfaces **206**. User interfaces **206** may include one or more screens, microphones, mice, touchpads, keyboards, or any other interface providing a mechanism for user input.

The communication processor **218** may include a digital signal processor and/or a controller which may direct such communication functionality of vehicle **100** according to the communication protocols associated with one or more radio access networks, and may execute control over antenna system **106** and RF transceiver(s) **108** to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of vehicle **100** shown in FIGS. **1** and **2** may depict only a single instance of such components.

Vehicle **100** may transmit and receive wireless signals with antenna system **106,** which may be a single antenna or an antenna array that includes multiple antenna elements. In some aspects, antenna system **202** may additionally include analog antenna combination and/or beamforming circuitry. In the receive (RX) path, RF transceiver(s) **108** may receive analog radio frequency signals from antenna system **106** and perform analog and digital RF front-end processing on the analog radio frequency signals to produce digital baseband samples (e.g., In-Phase/Quadrature (IQ) samples) to provide to communication processor **218**. RF transceiver(s) **108** may include analog and digital reception components including amplifiers (e.g., Low Noise Amplifiers (LNAs)), filters, RF demodulators (e.g., RF IQ demodulators)), and analog-to-digital converters (ADCs), which RF transceiver(s) **108** may utilize to convert the received radio frequency signals to digital baseband samples. In the transmit (TX) path, RF transceiver(s) **108** may receive digital baseband samples from communication processor **218** and perform analog and digital RF front-end processing on the digital baseband samples to produce analog radio frequency signals to provide to antenna system **106** for wireless transmission. RF transceiver(s) **108** may thus include analog and digital transmission components including amplifiers (e.g., Power Amplifiers (PAs), filters, RF modulators (e.g., RF IQ modulators), and digital-to-analog converters (DACs), which RF transceiver(s) **108** may utilize to mix the digital baseband samples received from communication processor **218** and produce the analog radio frequency signals for wireless transmission by antenna system **106**. In some aspects, communication processor **218** may control the radio transmission and reception of RF transceiver(s) **108,** including specifying the transmit and receive radio frequencies for operation of RF transceiver(s) **108.**

According to some aspects, communication processor **218** includes a baseband modem configured to perform physical layer (PHY, Layer 1) transmission and reception processing to, in the transmit path, prepare outgoing transmit data provided by communication processor **218** for transmission via RF transceiver(s) **108,** and, in the receive path, prepare incoming received data provided by RF transceiver(s) **108** for processing by communication processor **218**. The baseband modem may include a digital signal processor and/or a controller. The digital signal processor may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. The digital signal processor may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, the digital signal processor may include one or more processors configured to retrieve and execute program code that defines control and processing logic for physical layer processing operations. In some aspects, the digital signal processor may execute processing functions with software via the execution of executable instructions. In some aspects, the digital signal processor may include one or more dedicated hardware circuits (e.g., ASICs, FPGAs, and other hardware) that are digitally configured to specific execute processing functions, where the one or more processors of digital signal processor may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of the digital signal processor may be realized separately, or the processor and hardware accelerator may be coupled to each other as part of an integrated circuit.

Vehicle 100 may be configured to operate according to one or more radio communication technologies. The digital signal processor of the communication processor 218 may be responsible for lower-layer processing functions (e.g., Layer 1/PHY) of the radio communication technologies, while a controller of the communication processor 218 may be responsible for upper-layer protocol stack functions (e.g., Data Link Layer/Layer 2 and/or Network Layer/Layer 3). The controller may thus be responsible for controlling the radio communication components of vehicle 100 (antenna system 106, RF transceiver(s) 108, position device 114, etc.) in accordance with the communication protocols of each supported radio communication technology, and accordingly may represent the Access Stratum and Non-Access Stratum (NAS) (also encompassing Layer 2 and Layer 3) of each supported radio communication technology. The controller may be structurally embodied as a protocol processor configured to execute protocol stack software (retrieved from a controller memory) and subsequently control the radio communication components of vehicle 100 to transmit and receive communication signals in accordance with the corresponding protocol stack control logic defined in the protocol stack software. The controller may include one or more processors configured to retrieve and execute program code that defines the upper-layer protocol stack logic for one or more radio communication technologies, which can include Data Link Layer/Layer 2 and Network Layer/Layer 3 functions. The controller may be configured to perform both user-plane and control-plane functions to facilitate the transfer of application layer data to and from vehicle 100 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by the controller of communication processor 218 may include executable instructions that define the logic of such functions.

In some aspects, vehicle 100 may be configured to transmit and receive data according to multiple radio communication technologies. Accordingly, in some aspects one or more of antenna system 106, RF transceiver(s) 108, and communication processor 218 may include separate components or instances dedicated to different radio communication technologies and/or unified components that are shared between different radio communication technologies. For example, in some aspects, multiple controllers of communication processor 218 may be configured to execute multiple protocol stacks, each dedicated to a different radio communication technology and either at the same processor or different processors. In some aspects, multiple digital signal processors of communication processor 218 may include separate processors and/or hardware accelerators that are dedicated to different respective radio communication technologies, and/or one or more processors and/or hardware accelerators that are shared between multiple radio communication technologies. In some aspects, RF transceiver(s) 108 may include separate RF circuitry sections dedicated to different respective radio communication technologies, and/or RF circuitry sections shared between multiple radio communication technologies. In some aspects, antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Communication processor 218 may be configured to implement one or more vehicle-to-everything (V2X) communication protocols, which may include vehicle-to-vehicle (V2V), vehicle-to-infrastructure (V2I), vehicle-to-network (V2N), vehicle-to-pedestrian (V2P), vehicle-to-device (V2D), vehicle-to-grid (V2G), and other protocols. Communication processor 218 may be configured to transmit communications including one-way or two-way communications, such as between the vehicle 100 and one or more other (target) vehicles in an environment of the vehicle 100 (e.g., to facilitate coordination of navigation of the vehicle 100 in view of or together with other (target) vehicles in the environment of the vehicle 100). The communication processor 218 can also be configured to transmit a broadcast transmission to unspecified recipients in a vicinity of the transmitting vehicle 100.

Communication processor 218 may be configured to operate via a first RF transceiver of the one or more RF transceivers(s) 108 according to different desired radio communication protocols or standards. By way of example, communication processor 218 may be configured in accordance with a Short-Range mobile radio communication standard such as e.g. Bluetooth, Zigbee, and the like, and the first RF transceiver may correspond to the corresponding Short-Range mobile radio communication standard. As another example, communication processor 218 may be configured to operate via a second RF transceiver of the one or more RF transceivers(s) 108 in accordance with a Medium or Wide Range mobile radio communication standard such as, e.g., a 3G (e.g. Universal Mobile Telecommunications System - UMTS), a 4G (e.g. Long Term Evolution - LTE), or a 5G mobile radio communication standard in accordance with corresponding 3GPP (3rd Generation Partnership Project) standards. As a further example, communication processor 218 may be configured to operate via a third RF transceiver of the one or more RF transceivers(s) 108 in accordance with a Wireless Local Area Network communication protocol or standard such as e.g. in accordance with IEEE 802.11 (e.g. 802.11, 802.11a, 802.11b, 802.11g, 802.11n, 802.11p, 802.11-12, 802.1 lac, 802.1 lad, 802.1 lah, and the like). The one or more RF transceiver(s) **108** may be configured to transmit signals via antenna system **106** over an air interface. The RF transceivers **108** may each have a corresponding antenna element of antenna system **106,** or may share an antenna element of the antenna system **106.**

Memory **214** may embody a memory component of vehicle **100,** such as a hard drive or another such permanent memory device. Although not explicitly depicted in FIGS. **1** and **2,** the various other components of vehicle **100,** e.g. one or more processors 102, shown in FIGS. **1** and **2** may additionally each include integrated permanent and non-permanent memory components, such as for storing software program code, buffering data, etc.

The antenna system **106** may include a single antenna or multiple antennas. In some aspects, each of the one or more antennas of antenna system **106** may be placed at a plurality of locations on the vehicle **100** in order to ensure maximum RF coverage. The antennas may include a phased antenna array, a switch-beam antenna array with multiple antenna elements, etc. Antenna system **106** may be configured to operate according to analog and/or digital beamforming schemes in order to maximize signal gains and/or provide levels of information privacy. Antenna system **106** may include separate antennas dedicated to different respective radio communication technologies, and/or antennas shared between multiple radio communication technologies. While shown as a single element in FIG. **1,** antenna system **106** may include a plurality of antenna elements (e.g., antenna arrays) positioned at different locations on vehicle **100.** The placement of the plurality of antenna elements may be strategically chosen in order to ensure a desired degree of RF coverage. For example, additional antennas may be placed at the front, back, corner(s), and/or on the side(s) of the vehicle **100.**

Data acquisition devices **112** may include any number of data acquisition devices and components depending on the requirements of a particular application. This may include: image acquisition devices, proximity detectors, acoustic sensors, infrared sensors, piezoelectric sensors, etc., for providing data about the vehicle's environment. Image acquisition devices may include cameras (e.g., standard cameras, digital cameras, video cameras, single-lens reflex cameras, infrared cameras, stereo cameras, etc.), charge coupling devices (CCDs) or any type of image sensor. Proximity detectors may include radar sensors, light detection and ranging (LIDAR) sensors, mmWave radar sensors, etc. Acoustic sensors may include microphones, sonar sensors, or ultrasonic sensors, etc. Accordingly, each of the data acquisition units may be configured to observe a particular type of data of the vehicle's **100** environment and forward the data to the data acquisition processor **214** in order to provide the vehicle with an accurate portrayal of the vehicle's environment. The data acquisition devices **112** may be configured to implement preprocessed sensor data, such as radar target lists or LIDAR target lists, in conjunction with acquired data.

Measurement devices **116** may include other devices for measuring vehicle-state parameters, such as a velocity sensor (e.g., a speedometer) for measuring a velocity of the vehicle **100,** one or more accelerometers (either single axis or multi-axis) for measuring accelerations of the vehicle **100** along one or more axes, a gyroscope for measuring orientation and/or angular velocity, odometers, altimeters, thermometers, etc. It is appreciated that vehicle **100** may have different measurement devices **116** depending on the type of vehicle it is, e.g., car, drone, boat, or etc.

Position devices **114** may include components for determining a position of the vehicle **100.** For example, this may include global position system (GPS) or other global navigation satellite system (GNSS) circuitry configured to receive signals from a satellite system and determine a position of the vehicle **100.** Position devices **114,** accordingly, may provide vehicle **100** with satellite navigation features.

The one or more memories **104** may store data that may correspond to a map, e.g., in a database or in any different format. For example, the map may indicate a location of known landmarks, roads, paths, network infrastructure elements, or other elements of the vehicle's **100** environment. The one or more processors **102** may process sensory information (such as images, radar signals, depth information from LIDAR, or stereo processing of two or more images) of the environment of the vehicle **100** together with position information, such as a GPS coordinate, a vehicle's ego-motion, etc., to determine a current location of the vehicle **100** relative to the known landmarks, and refine the determination of the vehicle's location. Certain aspects of this technology may be included in a localization technology such as a mapping and routing model.

The map database (DB) **204** may include any type of database storing (digital) map data for the vehicle **100,** e.g., for the control system **200.** The map database **204** may include data relating to the position, in a reference coordinate system, of various items, including roads, water features, geographic features, businesses, points of interest, restaurants, gas stations, etc. The map database **204** may store not only the locations of such items, but also descriptors relating to those items, including, for example, names associated with any of the stored features. In some aspects, a processor of the one or more processors **102** may download information from the map database **204** over a wired or wireless data connection to a communication network (e.g., over a cellular network and/or the Internet, etc.). In some cases, the map database **204** may store a sparse data model including polynomial representations of certain road features (e.g., lane markings) or target trajectories for the vehicle **100.** The map database **204** may also include stored representations of various recognized landmarks that may be provided to determine or update a known position of the vehicle **100** with respect to a target trajectory. The landmark representations may include data fields such as landmark type, landmark location, among other potential identifiers.

Furthermore, the control system **200** may include a driving model, e.g., implemented in an advanced driving assistance system (ADAS) and/or a driving assistance and automated driving system. By way of example, the control system **200** may include (e.g., as part of the driving model) a computer implementation of a formal model such as a safety driving model. A safety driving model may be or include a mathematical model formalizing an interpretation of applicable laws, standards, policies, etc. that are applicable to self-driving vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic and in turn limit the scalability of system deployment; and third, the interpretation should be efficiently verifiable in the sense that it can be rigorously proven that the self-driving (autonomous) vehicle correctly implements the interpretation of the law. A safety driving model, illustratively, may be or include a mathematical model for safety assurance that enables identification and performance of proper responses to dangerous situations such that self-perpetrated accidents can be avoided.

As described above, the vehicle **100** may include the control system **200** as also described with reference to FIG. **2**. The vehicle **100** may include the one or more processors **102** integrated with or separate from an engine control unit (ECU) which may be included in the mobility system **120** of the vehicle **100**. The control system **200** may, in general, generate data to control or assist to control the ECU and/or other components of the vehicle **100** to directly or indirectly control the movement of the vehicle **100** via mobility system **120**. The one or more processors **102** of the vehicle **100** may be configured to implement the aspects and methods described herein.

The components illustrated in FIGS. **1** and **2** may be operatively connected to one another via any appropriate interfaces. Furthermore, it is appreciated that not all the connections between the components are explicitly shown, and other interfaces between components may be covered within the scope of this disclosure.

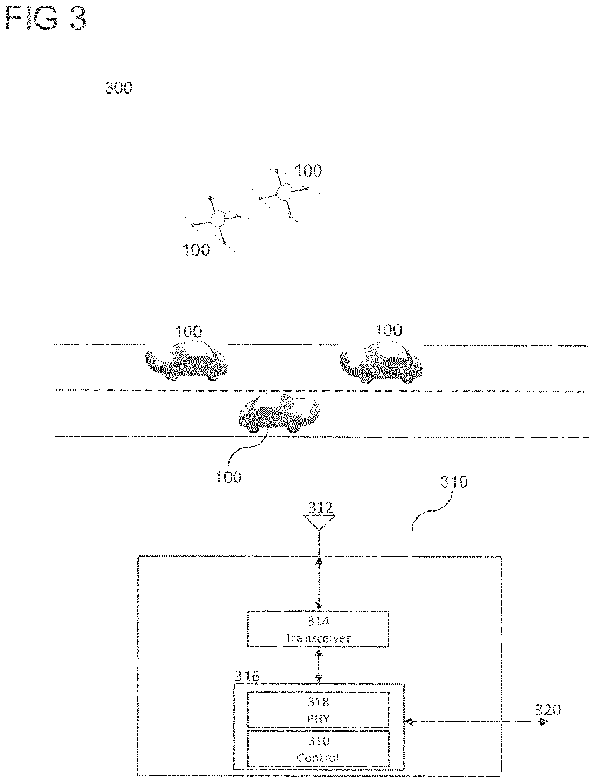

FIG. **3** shows an exemplary network area **300** according to some aspects. Network area **300** may include a plurality of vehicles **100,** which may include, for example, drones and ground vehicles. Any one of these vehicles may communicate with one or more other vehicles **100** and/or with network infrastructure element (NIE) **310.** NIE **310** may be a base station (e.g. an eNodeB, a gNodeB, etc.), a road side unit (RSU), a road sign configured to wirelessly communicate with vehicles and/or a mobile radio communication network, etc., and serve as an interface between one or more of vehicles **100** and a mobile radio communications network, e.g., an LTE network or a 5G network.

NIE **310** may include, among other components, at least one of an antenna system **312,** a RF transceiver **314,** and a baseband circuit **316** with appropriate interfaces between each of them. In an abridged overview of the operation of NIE **310,** NIE **310** may transmit and receive wireless signals via antenna system **312,** which may be an antenna array including multiple antenna arrays. Antenna system **312** may include multiple antenna elements (e.g., multiple antenna arrays) in order to employ multiple-input and multiple-output (MIMO) methods and schemes.

RF transceiver **314** may perform transmit and receive RF processing to convert outgoing baseband samples from baseband circuit **316** into analog radio signals to provide to antenna system **312** for radio transmission and to convert incoming analog radio signals received from antenna system **312** into baseband samples to provide to baseband circuit **316.** Accordingly, RF transceiver **314** may be configured to operate similarly to the RF transceiver(s) described in FIGS. **1** and **2**, albeit perhaps on a much larger scale (e.g., amplifiers to transmit higher power signals, etc.).

Baseband circuit **316** may include a controller **310** and a physical layer processor **318** which may be configured to perform transmit and receive PHY processing on baseband samples received from RF transceiver **314** to provide to a controller **310** and on baseband samples received from controller **310** to provide to RF transceiver **314.** In some aspects, the baseband modem **316** may be located external to the NIE **310,** e.g., at a centralized location of a mobile radio communication network. Controller **310** may control the communication functionality of NIE **310** according to the corresponding radio communication technology protocols, which may include exercising control over antenna system **312,** RF transceiver **314,** and physical layer processor **318.** Each of RF transceiver **314,** physical layer processor **318,** and controller **310** may be structurally realized with hardware (e.g., with one or more digitally-configured hardware circuits or FPGAs), as software (e.g., as one or more processors executing program code defining arithmetic, control, and I/O instructions stored in a non-transitory computer-readable storage medium), or as a mixed combination of hardware and software. NIE **310** may also include an interface **320** for communicating with (e.g. receiving instructions from, providing data to, etc.) with a core network according to some aspects.

Additionally, NIE **310** may include a memory **330,** which may be internal to NIE **310** (as shown in FIG. **3**) or external to NIE **310** (not shown). Memory **330** may store one or more maps of the coverage area of NIE **310** among other types of information. Each of the one or more maps may include a static layer depicting environmental elements that remain largely unchanged over longer periods of time (e.g., roads, structures, trees, etc.) and/or a dynamic layer with more frequent changes (e.g., vehicles, detected obstacles, construction, etc.). In some aspects, memory **330** may also store maps corresponding to one or more neighboring areas of NIE **310** so as to provide vehicles within its coverage area with information of neighboring coverage areas (e.g., to facilitate the process when a vehicle moves to the coverage of the neighboring NIE).

In this disclosure, risk may be the "probability of something happening multiplied by the resulting cost or benefit it does" In short, risk can be defined a combination of a risk event probability $P_e$ with its severity $C_e$, if the event *e* happens. In one example, uncertainty-aware instantaneous collision risk may be determined by

$$R_e(t, \Delta t) = \tau^{-1}[I_e(t)] \, \Delta t \, C_e[I_e(t)]$$

Where $\tau^{-1}[I_e(t)]$ represents collision probability and $C_e[I_e(t)]$ represents cost (severity) term. Examples for cost models are simple constant costs, e.g. $C_e = 1$, cost models that represent severity in terms of energy or force, e.g. elastic or inelastic collision models, or even cost models that estimate the energy/force impact on the passengers by representing the vehicles similar to electric RCL-networks with elastic damping components (energy absorbers) and stiff components.

In accordance with exemplary embodiments of the present disclosure, risk determinations of situations can enable further considerations for improving vehicle performance. In one example, instead of considering a true/false decision to define whether a situation is critical or not and whether a proper response should be applied, a determined risk value can be compared to a maximum acceptable risk. This value can be adapted to different situations, geo-localizations, national rules and laws, cultural preferences, etc. without the need to adapt any driving model parameters. That is, a safety driving models may be used except that risk values are used to determine safe/unsafe situations or behaviors and not geometrical distances.

In another example, further the use of risk values can allow adaption of driving model parameters so as to keep risk at or near a certain level. That is, driving model parameters used by a safety driving model may be adapted dynamically to keep a resulting risk at same level, such as if an autonomous driving (AD) changes speeds.

Further, in some embodiments, a vehicle, for redundancy reasons, may use multiple approaches (using same or different sources or combination of sources) for object detection and tracking will be applied. This might result in contradictory information when creating the environment model. Accordingly, risk values may be determined in multiple variants of the object list (object list for the situation). In general, these different variants of the same object may be treated like different objects in the object list but with different likelihoods as long as the sum of their likelihoods of existence sums up to 1.

Further, variations on other levels may be used. For example, risk values for different variations of the vehicle or own ego vehicle and on the assumed behavior of the other objects, referred to herein as object hypotheses. This results in more combinations of possible situations that have to be considered but allows in a much more flexible way to adapt the own behavior to the maximum acceptable risk. Also, the used driving model parameters can be adapted to the specific considered behaviors. This leads to a set of driving model parameter sets with each set related to a combination of ego vehicle behavior and objects hypothesis.

In accordance with exemplary embodiments, a risk-aware safety driving model may be implemented so as to calculate or estimate collision risk (risk values) for each situation (e.g., vehicular or traffic situation), and use these risk values to identify safe and unsafe states, rather than using geometrical distance estimates based on worst-case assumptions.

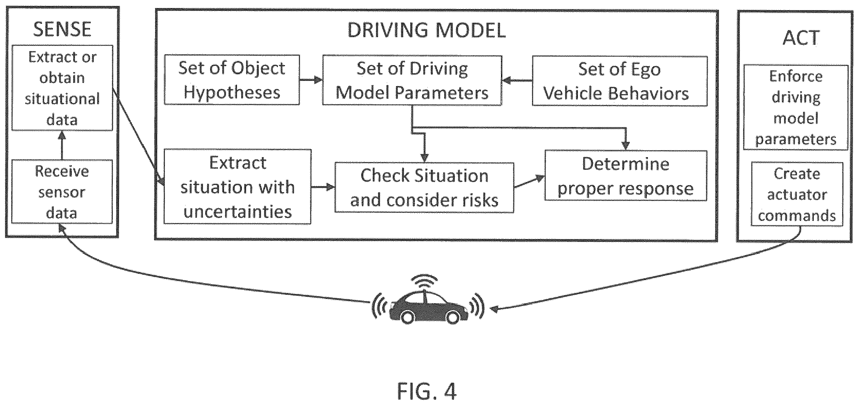

FIG. 4 shows an exemplary flow diagram for implementing an exemplary risk-aware safety driving model. In accordance with embodiments, the risk-aware safety driving model may be implemented or executed by one or more processors, e.g., one or more processors executing software instructions as described herein.

For implementing the risk-aware safety model, a complete or perfect object list is needed as input to the driving safety model. That, is situational data and/or environmental data describe objects (e.g., traffic participants) in the vehicle's traffic situation is needed. This situational data may be obtained from various input sources, including, for example, from obtained sensor data for the vehicle. Other sources of data may be geographical data, e.g., GPS coordinate data, map data, or any other relevant information for describing the traffic environment and objects therein. This situational data, which includes an object list, can also include existence probabilities for each object. Further other aspects of the situational data may be provided with uncertainties, such as, for example, probabilities with respect to position, orientation, velocities of objects described in the situational data.

Further, as shown in FIG. 4, from this situational data, at least one situation, e.g., data describing traffic situation, may be extracted. An extracted situation may describe a potential conflict between an ego vehicle and at least one other object. The extracted situation may be data in a form according to the safety driving model.

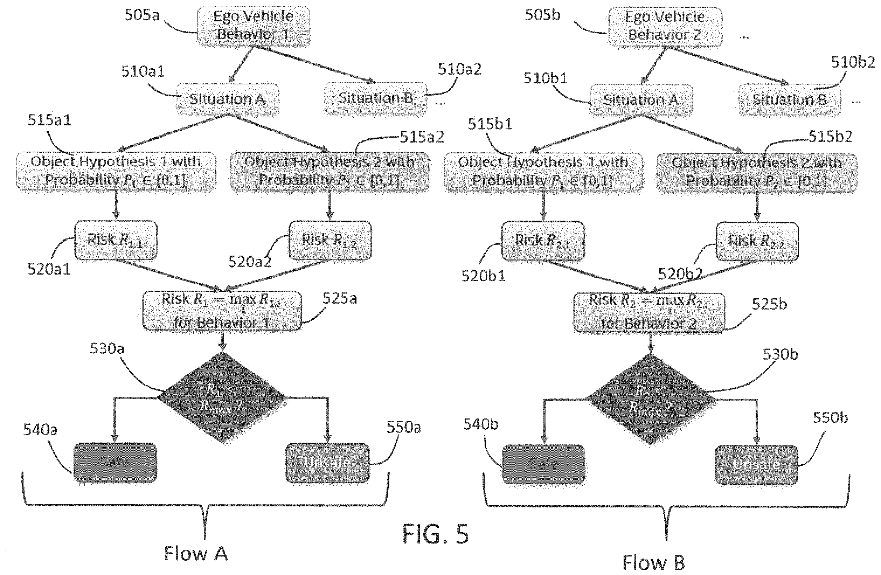

Extracted situations may include an intersection (right-of-way) conflict, or a leading/approaching-vehicle conflict. After extractions, each situation may be checked. This may include implementing the method depicted in FIG. 5, which will be described in greater detail later. As such, the check situation evaluates different combination of ego behaviors and other object (e.g., other traffic participants such as vehicles, bicyclists, pedestrians, etc.) actions or behaviors.

That is, in each situation, the ego vehicle can potentially behave differently. For example, the ego vehicle could continue traveling with its current velocity, or decelerate using braking parameter $beta_{min} = 2m/s^2$, but other parameters or values could be such as breaking parameter having a minimum value $\beta_{min} = 4m/s^2$. Hence, there are different behaviors associated to different values of the various driving model parameters that should be taken into account. This is in contrast to other safety driving model approaches which may consider only ego vehicle behavior represented by one set of driving model parameters and values.

Further, for each extracted situation, different options for the other object behavior (object hypotheses) are considered. Like the various ego vehicle behaviors, the different object hypotheses can have an impact to driving model parameters. As such, each combination of different considered ego vehicle behaviors and object hypotheses lead to a set of driving model parameter.

Ego vehicle behavior j together with one object hypothesis i and its probability $P_i \in [0,1]$ can be used to estimate the collision risk $R_{j,i}$ using the risk model mentioned above. In comparison, the classical or known safety driving model approaches use only hypothesis with $P_1 = 1$ corresponding to braking with $\beta_{max}$ in the simple longitudinal case.

In accordance with exemplary embodiments of the present disclosure, multiple hypotheses may be used where:

$$\sum_i P_i = 1.$$

As a result, in one or more exemplary embodiments, the overall risk for a behavior j can be determined by

$$R_j = \max_i R_{j,i}$$

In some exemplary embodiments, the overall risk or maximum risk for a behavior may be determined differently, and, for example, not based solely on a single maximum risk value for a behavior.

Furthermore, each risk value can be compared against an allowed risk threshold value, $R_{max}$. If the risk value is below the threshold, the corresponding ego vehicle behavior can be considered safe, and hence allowed to be executed or implemented by a control system of the vehicle.

In the event that there are multiple safe behaviors, a decision can be made to select a behavior, the corresponding driving model parameter set (driving model parameters with certain values) to implement. In various examples, the selected safe behavior selected might fulfill some predetermined criteria. The selected safe behavior or the selected driving model parameters (driving model parameters with certain values) may be one that produces the smoothest transition from the previous or current driving behavior. For example, the selected safe driving behavior may be one that minimizes acceleration or deceleration from current ego driving behavior or is the behavior with driving model parameters and values that are closest to the current ego vehicle behavior or movement. In other examples, the selected driving behavior may be one that maintains the risk level, such as in comparison to current or recent driving behavior. That is the selected behavior may be within a defined range or current or past risk levels. In other case, multiple considerations (e.g., absolute level or risk, reducing changes in risk, reducing or minimizing changes in ego vehicle behavior or movement, etc.) may be factored or weighted for deciding a proper response and choosing a vehicle behavior.

In some cases, a selected driving behavior may be the one that minimizes risk. For example, if all determined driving behaviors are considered unsafe or all the driving behaviors have determined or estimated risks are all above the acceptable or maximum risk threshold, then the driving behavior selected to be implemented is the driving behavior with the lowest determined risk. That is, the proper response selects driving model parameters corresponding to the with lowest risk.

In any case, after a decision, actuator commands from the selected driving model parameters can be created and/or implemented by a control system of the vehicle for actually realizing and executing the selected driving behavior.

FIG. 5, shows flow diagrams illustrating a method for evaluating combinations of ego vehicle behavior and detected object. The method of FIG. 5 may be implemented by one or more processors of the ego vehicle. First, the parts of each combination are selected, e.g., a driving behavior (e.g., potential behavior of ego vehicle), a traffic situation (previously extracted from situation data), and object hypothesis (e.g., potential behavior of traffic participant). In the example of FIG. 5, a vehicle behavior or ego vehicle behavior is selected at 505, e.g., selected from a data set of possible vehicle behaviors.

In exemplary embodiments herein, the ego vehicle behaviors may be described through the given parameters (e.g., driving model parameters), which can be stored in a database. For the object hypotheses, the potential actions or movements for a traffic participant may be obtained through sensor data and behavior prediction, including, for example worst case predictions.

Similarly, a situation is selected at 510, from a set of possible situations. As described herein, traffic situations may be determined and/or extracted from obtained situational data e.g., sensor data. Each traffic situation may include at least one other traffic participant, that is the data representing the extracted traffic situation may define a traffic participant. A situation may reflect a current or near current situation. In other cases, the extracted situation may be for a projected or upcoming situation.

At 515, one object hypothesis or potential action for the traffic participant is selected from a set of possible hypothesis. As described herein, an object hypothesis can include a defined potential action of a traffic participant for an extracted situation and further include a probability or likelihood of object hypothesis occurring.

An object hypothesis may data defining a behavior of another vehicle, a vehicle other than the ego vehicle in a situation. For example, object hypothesis may include describe behaviors for other vehicles such as, accelerating, decelerating, breaking, stopping, changing lanes, turning, exiting, etc. Other behaviors, such as, movement behaviors, may be defined for other traffic participants such as pedestrians, bicyclists, animals, etc.

After a combination has been chosen, e.g., a unique selection of a behavior, a situation, and an object hypothesis from steps 505 to 515, risk or a risk values for the combination can be determined or estimated at 520.

As shown in FIG. 5, the process flow from steps 505 may be repeatedly for different variations. FIG. 5 shows various flows and subflows. Each of the mains flows, e.g., flow A, flow B, ...etc. may correspond to a given behavior. That is 505a corresponds to one ego vehicle behavior while 505b correspond to another different ego vehicle, and so on. Similarly, for each ego vehicle behavior one or more situations can be selected and evaluated (e.g., 510al, 510a2). Further, each ego vehicle behavior and situation, each object hypothesis is evaluated as shown in 520al, 520a2. That is, each of 520al, 520a2, ..., etc. is a risk determination that corresponds to a different combination having a different selected object hypotheses for a given ego behavior and a given situation which produces respective risk values. Accordingly, at 525 the maximum risk for the behavior for the situation is evaluated. That is, the important or sued risk value for a behavior may be the maximum risk value out of all the risk values determined for all the possible object hypotheses for a given ego behavior and a given traffic situation. In other words, from the maximum risk value is selected from all the risk values determined for each combination of unique object hypotheses for a given behavior and given situation. Then at 530a, this maximum risk value for the behavior is compared against a maximum or threshold risk value. If the maximum risk value is less than a threshold, the behavior is considered safe (540), otherwise it is considered unsafe (550).

This process can be repeated for other unique combinations and behaviors and situations. That, for each situation and behavior, the possible object hypothesis are considered to determine risk values, with the maximum determined risk value being used for evaluation or consideration as whether to implement the behavior for the situation.

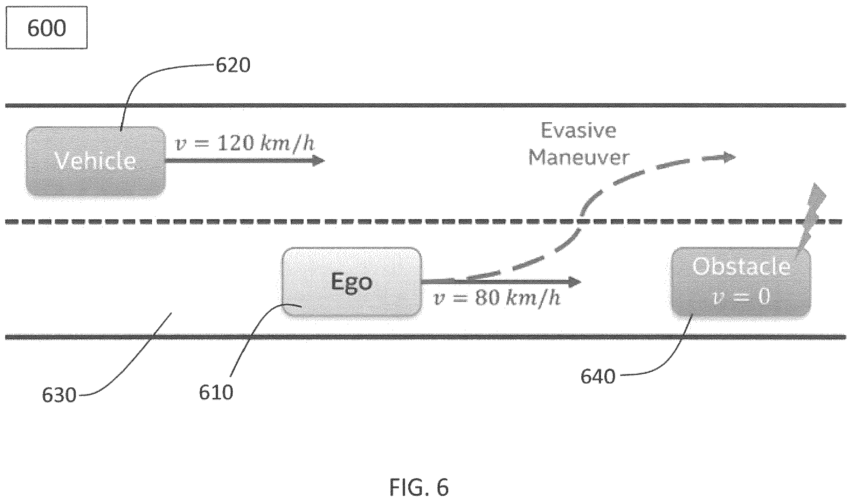

FIG. 6 shows an example of a traffic situation 600 including an ego vehicle 610 and another vehicle 620 traveling on a roadway 630 including an obstacle 640 located on the roadway. The exemplary conditions for the situation may be that the ego vehicle 610 is traveling at a speed of 80 km/h, the other vehicle 620 traveling at 120 km/h, and the obstacle 640 is static or not moving. In accordance with exemplary embodiments, a risk aware safety driving model for the ego vehicle 610 may consider one or more evasive maneuvers in addition to non-evasive maneuvers to implement. An evasive maneuver may one or more actions to avoid a collision, including for example, changing lanes, accelerating, decelerating, turning, exiting, etc.

Accordingly, for the situation in FIG. 6 and the behaviors (e.g., evasive maneuvers), the risk-aware hypothesis may consider various behaviors (e.g., evasive and non-evasive behaviors) for various object hypotheses. In this case, the risk aware driving model may estimate or determine risk values associated with different potential behaviors of the other vehicle 620. For example, as indicated in the object hypotheses, the other vehicle 620 may further speed up (accelerate), slow down (decelerate), maintain current speed, change lanes, break with certain intensity, etc. For each of the object hypotheses, a likelihood or probability may be associated therewith. Using the associated probability for each of the object hypotheses, the risk aware driving safety model can determine or calculate an estimated a risk value (e.g., risk of collision) for each combination of the traffic situation, ego vehicle behavior, and object hypothesis.

Then, the maximum risk value of from the all of the risk values of determined for the object hypotheses can compared against a threshold denoting a maximum acceptable level of risk. The risk value may be the risk of collision. If the maximum risk value for the behavior is less than threshold, the behavior may be considered safe and acceptable for implementation by the ego vehicle.

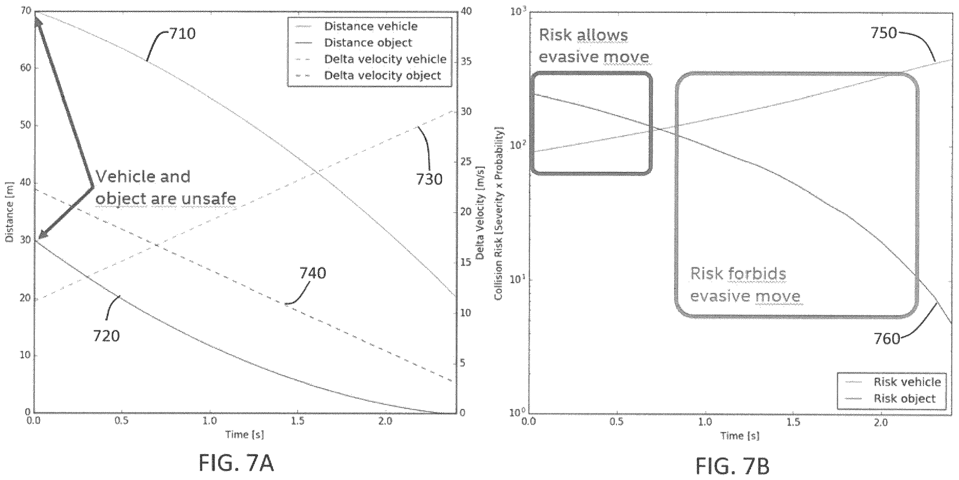

FIGS. 7A-7B include exemplary graphs for the situation shown in FIG. 6. FIG. 7A graphs or plots the distance 710 between the ego vehicle 610 to the vehicle 620 over time and the distance 720 between the ego vehicle 610 and the object 640 when the vehicle implements a potential evasive maneuver. FIG. 7A also plots the change in velocity 730 over time for the vehicle 610 with respect to the vehicle 620 and with respect to the object 640 for potential evasive maneuver. FIG. 7B is a graph that plots the collision risk (severity X probability) of the vehicle 610 with respect to the other vehicle 620 and the object 640. As shown in FIG. 7B, graphs the collision risk 750 is the risk of collision between the vehicle 610 and the vehicle 620 while the collision risk 760 shows the risk of collision between the vehicle 610 and the object 640 over time. The risks 750 and 760 are plotted versus time (in seconds). As shown, the risk values over time indicate that there is a small window where the risk for the lane change maneuver is lower than the non-evasive maneuver (staying on same lane and colliding with static obstacle).

In accordance with exemplary embodiments, risk-aware safety driving models described herein may consider various different ego vehicle behaviors for application or implementation. For example, different ego behaviors can include considering different evasive maneuvers as well. As such, evasive maneuvers can be compared against non-evasive behaviors in order to decide which behavior should be applied or not. This is especially advantageous over known safety driving models have rules that allow application of evasive maneuvers only if other driving rules of the safety driving model are not violated. However, risk-aware safety driving models described herein can allow the application of evasive maneuvers by considering risk. If the risk, e.g., collision risk of applying a particular evasive maneuver is lower than not performing the evasive maneuver, then the evasive maneuver can be applied. Again this decision results from by considering the risk values of different situations by an analog value instead of simple true/false definitions.

In the following, various aspects of the present disclosure will be illustrated:

In Example 1, is a safety system including one or more processors configured to, for each combination of one or more combinations, each combination including a driving behavior of one or more driving behaviors, a traffic situation of one or more traffic situations in which to implement the one or more driving behaviors, and an object hypothesis of one or more object hypotheses for each of the one or more traffic situations: obtain, for the respective combination, one or more driving model parameters associated with the driving behavior and object hypothesis for the respective combination; obtain, for the respective combination, a probability indicating a likelihood of an accident or collision for the respective combination; determine, for the respective combination, a risk value based on the obtained safety driving parameters and the obtained probability for the respective combination; and select a driving behavior for each traffic situation based at least in part on the one or more determined risk values.

Example 2 is the safety system of Example 1, wherein the one or more processors may be further configured to determine, for each pair of driving behavior and traffic situation from the one or more combinations, whether a maximum risk value of the one or more determined risk values respectively corresponding to the one or more object hypotheses for the respective pair is less than a predefined threshold risk value.

Example 3 is the safety system of Example 2, wherein the one or more processors may be configured to select the driving behavior comprises to select for at least one traffic situation a driving behavior in which the maximum risk value of the driving behavior for the at least one traffic situation is less than the predefined threshold value.

Example 4 is the safety system of Example 2, wherein the one or more processors may be configured to select the driving behavior comprises to select a driving behavior for at least one traffic situation in which the maximum risk value of the driving behavior for the at least one traffic situation is more than the predefined threshold risk value in event that the one or more processors fail to determine any driving behavior having a maximum risk value for the respective situation less than the predefined risk threshold value.

Example 5 is the safety system of Example 2, wherein the one or more processors may be further configured to select a driving behavior for at least one situation in which the driving behavior has the lowest determined maximum risk value in comparison to other driving behaviors for the respective situation.

Example 6 is the safety system of Example 1, wherein the one or more processors may be configured to select the driving behavior for at least one traffic situation based on one or more predefined criteria in addition to determined risk values.

Example 7 is the safety system of Example 6, wherein the one or more processors may be configured to select the driving behavior for at least one traffic situation based at least one the associated driving model parameters that minimizes acceleration or deceleration of the vehicle.

Example 8 is the safety system of Example 6, wherein the one or more processors may be configured to select the driving behavior for at least one traffic situation based at least one the associated driving model parameters that is closest to a currently used set of driving model parameters.

Example 9 is the safety system of any of Examples 1 to 8, wherein the one or more processors may be configured to select the driving behavior during operation of the vehicle.

Example 10 is the safety system of any of Examples 1 to 9, wherein the one or more processors may be further configured to provide driving model parameters associated with each of the selected driving behaviors to a control system of the vehicle.

Example 11 is the safety system of any of Examples 1 to 10, wherein each traffic situation of the one or more traffic situations defines a traffic participant other than the vehicle.

Example 12 is the safety system of Example 11, wherein each object hypothesis of the one or more object hypotheses may define a potential action of the traffic participant.

Example 13 is the safety system of any of Examples 1 to 12, wherein each driving behavior of the one or more driving behavior may define a potential action of the vehicle.

Example 14 is the safety system of Example 13, wherein the potential action of the vehicle may include one or more evasive maneuvers.

Example 15 is the safety system of any of Examples 1 to 14, wherein the one more processors may be further configured to obtain traffic situational data; and extract the one or more traffic situations for the one or more combinations from the obtained traffic situational data.

Example 16 is the safety system of Example 15, wherein the situational data may include sensor data.

Example 17 is a non-transitory computer-readable medium containing instructions that when executed by one or more processors, may cause the one or more processors to, for each combination of one or more combinations, each combination including a driving behavior of one or more driving behaviors, a traffic situation of one or more traffic situations in which to implement the one or more driving behaviors, and an object hypothesis of one or more object hypotheses for each of the one or more traffic situations: obtain, for the respective combination, one or more driving model parameters associated with the driving behavior for the respective combination; obtain, for the respective combination, a probability indicating a likelihood of an accident or collision for the respective combination; determine, for the respective combination, a risk value based on the obtained safety driving parameters and the obtained probability for the respective combination; and select a driving behavior for each traffic situation based at least in part on the one or more determined risk values.

Example 18 is a system for an ego vehicle that may include one or more processors configured to: obtain traffic situational data; extract at least one vehicle situation based on sensor input and other input; and for each extracted vehicle situation: obtain one or more ego vehicle driving behaviors and one or more object hypotheses, for each unique pair of one vehicle driving behavior out of the one or more obtained ego vehicle driving behaviors and one object hypothesis out of the one or more obtained object hypotheses, obtain one or more driving model parameters for the respective unique pair, determine a collision risk value based on the driving model parameters for the respective unique pair, and determine whether the collision risk value is less than predefined threshold value for the respective pair; and select a driving behavior for each extracted vehicle situation based on the one or more determined collision risk values.

Example 19 is the system of Example 18, wherein the one or more processors may be configured to, for each extracted vehicle situation, provide driving model parameters associated with each selected driving behavior to a control system of the vehicle.

Example 20 is the system of Example 19, the system may further include the control system to control the vehicle for each extracted situation based on the provided driving model parameters for the respective extracted situation.

Example 21 is a method, comprising: for each combination of one or more combinations, each combination including a driving behavior of one or more driving behaviors, a traffic situation of one or more traffic situations in which to implement the one or more driving behaviors, and an object hypothesis of one or more object hypotheses for each of the one or more traffic situations: obtaining, for the respective combination, one or more driving model parameters associated with the driving behavior for the respective combination; obtaining, for the respective combination, a probability indicating a likelihood of an accident or collision for the respective combination; determining, for the respective combination, a risk value based on the obtained safety driving parameters and the obtained probability for the respective combination; and selecting a driving behavior for each traffic situation based at least in part on the one or more determined risk values.

Example 23 is a system for a vehicle including: means for obtaining one or more driving model parameters associated with a driving behavior for each combination of one or more combinations; means for obtaining a probability indicating a likelihood of an accident or collision for each combination of one or more combinations; means for determining for each combination of one or more combination, a risk value based on the obtained safety driving parameters and the obtained probability for the respective combination; and means for selecting a driving behavior of the one or more driving behaviors based at least in part on the one or more determined risk values, wherein each combination of one or more combinations includes a driving behavior of one or more driving behaviors, a traffic situation of one or more traffic situations in which to implement the one or more driving behaviors, and an object hypothesis of one or more object hypotheses for each of the one or more traffic situations.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1. A safety system for a vehicle comprising:

   one or more processors configured to,
   for each combination of one or more combinations, each combination including a driving behavior of one or more driving behaviors, a traffic situation of one or more traffic situations in which to implement the one or more driving behaviors, and an object hypothesis of one or more object hypotheses for each of the one or more traffic situations:
   obtain, for the respective combination, one or more driving model parameters associated with the driving behavior and object hypothesis for the respective combination;
   obtain, for the respective combination, a probability indicating a likelihood of an accident or collision for the respective combination;
   determine, for the respective combination, a risk value based on the obtained safety driving parameters and the obtained probability for the respective combination; and
   select a driving behavior for each traffic situation based at least in part on the one or more determined risk values.

2. The safety system of claim 1, wherein the one or more processors are further configured to comprises determine, for each pair of driving behavior and traffic situation from the one or more combinations, whether a maximum risk value of the one or more determined risk values respectively corresponding to the one or more object hypotheses for the respective pair is less than a predefined threshold risk value.

3. The safety system of claim 2, wherein the one or more processors configured to select the driving behavior comprises to select for at least one traffic situation a driving behavior in which the maximum risk value of the driving behavior for the at least one traffic situation is less than the predefined threshold value.

4. The safety system of any one of claims 2 or 3, wherein the one or more processors are configured to select the driving behavior comprises to select a driving behavior for at least one traffic situation in which the maximum risk value of the driving behavior for the at least one traffic situation is more than the predefined threshold risk value in event that the one or more processors fail to determine any driving behavior having a maximum risk value for the respective situation less than the predefined risk threshold value.

5. The safety system of any one of claims 2 to 4, wherein the one or more processors are further configured to select a driving behavior for at least one situation in which the driving behavior has the lowest determined maximum risk value in comparison to other driving behaviors for the respective situation.

6. The safety system of any one of claims 1 to 5, wherein the one or more processors are configured to select the driving behavior for at least one traffic situation based on one or more predefined criteria in addition to determined risk values.

7. The safety system of claim 6, wherein the one or more processors are configured to select the driving behavior for at least one traffic situation based at least one the associated driving model parameters that minimizes acceleration or deceleration of the vehicle.

8. The safety system of any one of claims 6 or 7, wherein the one or more processors are configured to select the driving behavior for at least one traffic situation based at least one the associated driving model parameters that is closest to a currently used set of driving model parameters.

9. The safety system of any one of claims 1 to 8, wherein the one or more processors are configured to select the driving behavior during operation of the vehicle.

10. The safety system of any one of claims 1 to 9, wherein the one or more processors are further configured to provide driving model parameters associated with each of the selected driving behaviors to a control system of the vehicle.

11. The safety system of any one of claims 1 to 10, wherein each traffic situation of the one or more traffic situations defines a traffic participant other than the vehicle; wherein preferably each object hypothesis of the one or more object hypotheses defines a potential action of the traffic participant.

12. The safety system of any one of claims 1 to 11, wherein each driving behavior of the one or more driving behavior defines a potential action of the vehicle;

wherein preferably the potential action of the vehicle comprises an evasive maneuver.

13. The safety system of any one of claims 1 to 12, wherein the one more processors are further configured to

obtain traffic situational data; and

extract the one or more traffic situations for the one or more combinations from the obtained traffic situational data;

wherein preferably the situational data comprises sensor data.

14. A non-transitory computer-readable medium containing instructions that when executed by one or more processors, cause the one or more processors to,

for each combination of one or more combinations, each combination including a driving behavior of one or more driving behaviors, a traffic situation of one or more traffic situations in which to implement the one or more driving behaviors, and an object hypothesis of one or more object hypotheses for each of the one or more traffic situations:

obtain, for the respective combination, one or more driving model parameters associated with the driving behavior for the respective combination, obtain, for the respective combination, a probability indicating a likelihood of an accident or collision for the respective combination,

determine, for the respective combination, a risk value based on the obtained safety driving parameters and the obtained probability for the respective combination, and

select a driving behavior for each traffic situation based at least in part on the one or more determined risk values.

15. The computer-readable medium of claim 14, wherein the instructions further cause the one or more processors are further configured to determine, for each pair of driving behavior and traffic situation from the one or more combinations, whether a maximum risk value of the one or more determined risk values respectively corresponding to the one or more object hypotheses for the respective pair is less than a predefined threshold risk value, and to select, for at least one traffic situation a driving behavior, a vehicle behavior in which the maximum risk value of the driving behavior for the at least one traffic situation is less than the predefined threshold value.

FIG 1

# FIG 2

200

| 112 | 112 | 112 | 112 | 114 GNSS | 116 Measurement |

102

### 214 Data Acquisition Processor

### 216 Application Processor

### 218 Communication Processor

### 104 Memory

### 204 Map DB

### 206 User interfaces

### 108 RF

### 108 RF

### 108 RF

106

# FIG 3

300

100

100

100

100

100

310

312

314
Transceiver

316

318
PHY

310
Control

320

FIG. 4

FIG. 5

FIG. 6

FIG. 7A

FIG. 7B

Europäisches
Patentamt

European
Patent Office

Office européen
des brevets

# EUROPEAN SEARCH REPORT

Application Number

EP 20 20 7740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/023838 A1 (ZHANG YAJIA [US]) 23 January 2020 (2020-01-23) * abstract; figures 4A-4C, 5-6 * * paragraphs [0001], [0019] * * paragraph [0022] - paragraph [0026] * * paragraph [0032] - paragraph [0040] * * paragraph [0043] - paragraph [0047] * * paragraph [0053] - paragraph [0056] * * paragraphs [0065], [0067] - paragraph [0068] * * paragraph [0073] - paragraph [0074] * ----- | 1-15 | INV. G08G1/16 B60W60/00 |
| X | US 2018/284785 A1 (BERNTORP KARL [US] ET AL) 4 October 2018 (2018-10-04) * abstract; figures 1B, 2A-2D, 3A-3C, 5A-5C, 6A-6C * * paragraphs [0001], [0010] * * paragraph [0015] - paragraph [0019] * * paragraph [0052] - paragraph [0055] * * paragraph [0058] - paragraph [0065] * * paragraph [0069] - paragraph [0071] * * paragraph [0078] - paragraph [0082] * * paragraph [0087] - paragraph [0090] * ----- | 1-15 | |
| X | US 2019/027038 A1 (CHINTAKINDI SUNIL [US] ET AL) 24 January 2019 (2019-01-24) * abstract; figures 1-3 * * paragraph [0002] - paragraphs [0003], [0005] * * paragraph [0017] - paragraph [0022] * * paragraphs [0029], [0035] - paragraph [0055] * ----- | 1-15 | TECHNICAL FIELDS SEARCHED (IPC) G08G B60W |

The present search report has been drawn up for all claims

| Place of search | Date of completion of the search | Examiner |
|---|---|---|
| The Hague | 3 May 2021 | Fiorenzo Catalano, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 7740

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | | Publication date | Patent family member(s) | | Publication date |
|---|---|---|---|---|---|
| US 2020023838 | A1 | 23-01-2020 | CN 110794823 A<br>EP 3598411 A1<br>JP 2020015493 A<br>US 2020023838 A1 | | 14-02-2020<br>22-01-2020<br>30-01-2020<br>23-01-2020 |
| US 2018284785 | A1 | 04-10-2018 | JP 6837558 B2<br>JP 2020514158 A<br>US 2018284785 A1<br>WO 2018179539 A1 | | 03-03-2021<br>21-05-2020<br>04-10-2018<br>04-10-2018 |
| US 2019027038 | A1 | 24-01-2019 | CA 3014658 A1<br>EP 3417313 A1<br>US 2019027038 A1<br>WO 2017142917 A1 | | 24-08-2017<br>26-12-2018<br>24-01-2019<br>24-08-2017 |

EPO FORM P0459

For more details about this annex : see Official Journal of the European Patent Office, No. 12/82